# EUROPEAN PATENT APPLICATION

(11) **EP 4 799 981 A1**
(43) Date of publication of application: **02.09.2026**
(21) Application number: 24882033.4
(22) Date of filing: 06.09.2024
(51) Int. Cl.: C01G 35/02, C01G 35/00, H01B 1/06, H01B 1/08

(54) **METHOD FOR PRODUCING PYROCHLORE-TYPE OXIDE**

(30) Priority: 25.10.2023 JP 2023183094
(71) Applicant: DENSO CORPORATION, Kariya-city, Aichi 448-8661 (JP); TOKYO UNIVERSITY OF SCIENCE FOUNDATION, Tokyo 162-8601 (JP)
(72) Inventor: ONODERA, Hitoshi, Kariya-city, Aichi 448-8661 (JP); YOSHIDA, Shuhei, Kariya-city, Aichi 448-8661 (JP); SHIMONISHI, Yuta, Kariya-city, Aichi 448-8661 (JP); FUJIMOTO, Kenjiro, Tokyo 162-8601 (JP); AIMI, Akihisa, Tokyo 162-8601 (JP)
(74) Representative: TBK
(86) International application number: PCT/JP2024/031973
(87) International publication number: WO 2025/088916

(57) **Abstract**

A method for producing a pyrochlore-type oxide includes a mixing process (S30) of mixing a composite oxide that contains at least cations other than an alkali metal cation with an alkali metal compound that contains the alkali metal cation, and a firing process (S40) of firing a mixture containing the composite oxide and the alkali metal compound at a predetermined temperature to produce the pyrochlore-type oxide. In a case where the composite oxide contains the alkali metal cation, a composition ratio of the alkali metal cation in the composite oxide is less than a composition ratio of the alkali metal cation in the alkali metal compound. The mixture contains the alkali metal compound in an amount exceeding a stoichiometric ratio relative to the pyrochlore-type oxide. In the firing process, the alkali metal compound is liquefied by heating at the predetermined temperature.

## Description

### CROSS REFERENCE TO RELATED APPLICATION

This application is based on Japanese Patent Application No. 2023-183094 filed on October 25, 2023, the disclosure of which is incorporated herein by reference.

### TECHNICAL FIELD

The present disclosure relates to a method for producing a pyrochlore-type oxide.

### BACKGROUND ART

Non-Patent Literature 1 describes a method for producing a pyrochlore-type oxide, in which a precursor composed of a lithium-containing composite oxide is mixed with raw materials including LiF and LaF₃ and, when the precursor contains Ta, the mixture is fired at 1200°C.

### PRIOR ART LITERATURES

### NON-PATENT LITERATURE

[Non-Patent Literature 1] Cyrille Galven et al., New Oxyfluoride Pyrochlores Li2-xLa(1+x)/3□(2x-1)/3B2O6F (B=Nb, Ta): Average and Local Structure Characterization by XRD, TEM and 19F Solid-State NMR Spectroscopy, European Journal of Inorganic Chemistry, Germany, October 11, 2010, No. 33, pp. 5272-5283.

### SUMMARY

However, in the production method of the above prior art, the firing temperature is high, causing the particles of the resulting pyrochlore-type oxide to undergo grain growth and become coarser. For example, when a pyrochlore-type oxide is used as a solid electrolyte for secondary batteries, it is preferable to make a solid electrolyte layer as thin as possible in order to reduce resistance, and therefore it is preferable to refine the particles of the pyrochlore-type oxide.

In view of the above, the present disclosure aims to provide a method for producing a pyrochlore-type oxide that enables the refinement of pyrochlore-type oxide particles.

To achieve the above object, one aspect of the present disclosure provides a method for producing a pyrochlore-type oxide that contains a plurality of cations including an alkali metal cation, and the method includes a mixing process and a firing process. In the mixing process, a composite oxide that contains at least cations other than the alkali metal cation is mixed with an alkali metal compound that contains the alkali metal cation. In the firing process, a mixture containing the composite oxide and the alkali metal compound is heated at a predetermined temperature to produce the pyrochlore-type oxide. In a case where the composite oxide contains the alkali metal cation, a composition ratio of the alkali metal cation in the composite oxide is less than a composition ratio of the alkali metal cation in the alkali metal compound. The mixture contains the alkali metal compound in an amount exceeding the stoichiometric ratio relative to the pyrochlore-type oxide. In the firing process, the alkali metal compound is liquefied by heating at the predetermined temperature

As a result, the pyrochlore-type oxide can be produced by a solid-liquid reaction in which the alkali metal compound in the liquid phase reacts with the composite oxide in the solid phase. In the solid-liquid reaction, the pyrochlore-type oxide can be produced at a lower temperature than in a solid-phase reaction, and by lowering the firing temperature, particles of the pyrochlore-type oxide can be made finer.

### BRIEF DESCRIPTION OF DRAWINGS

FIG. 1 is a cross-sectional view showing a configuration of a secondary battery according to an embodiment.
FIG. 2 is a diagram showing a crystal structure of a pyrochlore-type oxide.
FIG. 3 is a diagram showing a manufacturing process of the pyrochlore-type oxide.
FIG. 4 are SEM images of pyrochlore-type oxides.
FIG. 5 is a diagram showing types of precursors and Li compounds, and the like as well as particle sizes in Examples and Comparative Examples.

### DESCRIPTION OF EMBODIMENTS

Hereinafter, an embodiment in which a pyrochlore-type oxide of the present disclosure is applied to a solid electrolyte for a secondary battery will be described with reference to the drawings. A secondary battery 10 of the present embodiment is a lithium ion battery in which charging and discharging are performed by lithium ions moving between a negative electrode 12 and a positive electrode 14.

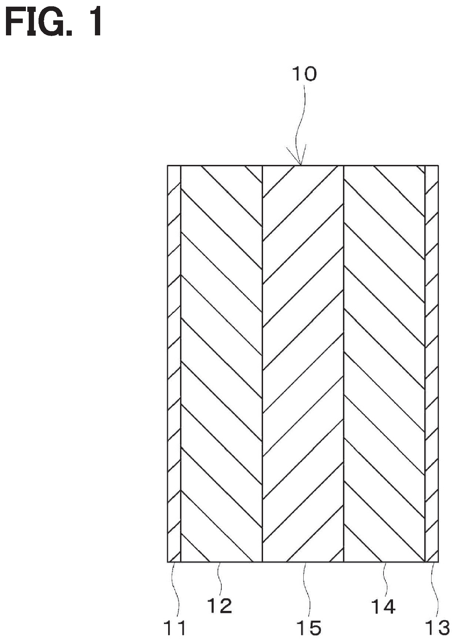

As shown in FIG. 1, the secondary battery 10 includes a negative electrode current collector 11, the negative electrode 12, a positive electrode current collector 13, the positive electrode 14, and a solid electrolyte 15. The solid electrolyte 15 corresponds to the solid electrolyte for the secondary battery.

The solid electrolyte 15 is sandwiched between the positive electrode 14 and the negative electrode 12. The negative electrode 12 and the solid electrolyte 15 are in contact with each other. The positive electrode 14 and the solid electrolyte 15 are in contact with each other. The negative electrode 12 and the positive electrode 14 are connected through the solid electrolyte 15. The secondary battery 10 of the present embodiment is a lithium ion battery in which charging and discharging are performed by lithium ions moving between the negative electrode 12 and the positive electrode 14 through the solid electrolyte 15.

A stacked body including the negative electrode 12, the positive electrode 14, and the solid electrolyte 15 is disposed between the negative electrode current collector 11 and the positive electrode current collector 13. The negative electrode current collector 11 and the negative electrode 12 are in contact with each other. The positive electrode current collector 13 and the positive electrode 14 are in contact with each other. The negative electrode current collector 11 and the positive electrode current collector 13 are connected through the stacked body.

Any material that can be used as a current collector for a lithium ion battery can be used for the negative electrode current collector 11 and the positive electrode current collector 13. In the present embodiment, Cu is used as the negative electrode current collector 11, and Al is used as the positive electrode current collector 13.

A negative electrode material constituting the negative electrode 12 can be any material that can be used as a negative electrode active material for lithium ion batteries, such as a carbon-based negative electrode material, an oxide-based negative electrode material, or a metal-based negative electrode material. In the present embodiment, a lithium-based negative electrode material or an Si-based negative electrode material is used.

A positive electrode material constituting the positive electrode 14 can be any material that can be used as a positive electrode active material for lithium ion batteries. As the positive electrode 14, for example, a cobalt-based positive electrode material (LiCoO₂), a nickel-based positive electrode material (LiNiO₂), a manganese-based positive electrode material (LiMn₂O₄), an iron phosphate-based positive electrode material (LiFePO₄), a ternary positive electrode material (NMC) mainly composed of nickel, manganese, and cobalt, and the like can be used.

The solid electrolyte 15 has ion conductivity and is capable of moving lithium ions between the negative electrode 12 and the positive electrode 14. It is preferable that the solid electrolyte 15 be formed as thin as possible in order to reduce the resistance of the secondary battery 10.

The solid electrolyte 15 is an oxide-based solid electrolyte, and is a pyrochlore-type oxide having a pyrochlore structure represented by the composition formula "Aa_{2-α}Ab_{(1+α)/3}B₂O_{7-β}X_{γ}". In order to make the solid electrolyte 15 as thin as possible, it is preferable that the pyrochlore-type oxide constituting the solid electrolyte 15 have a particle diameter as small as possible. The pyrochlore-type oxide of the present embodiment has a primary particle size in a range of 0.01 µm to 10 µm.

The particle diameter of the pyrochlore-type oxide refers to the length of the largest part of the particle, and may also be referred to as the maximum diameter or the major axis. In the present embodiment, the mode (peak value) of the particle size distribution is used as the particle size. The particle diameter of the pyrochlore-type oxide can be obtained as follows.

The geometric shape of the particles is observed using an electron microscope (SEM, TEM) or an atomic force microscope (AFM), and the maximum diameter of the particles to be measured is determined. The number of measurement samples, N, is set to 30 or more, for example. The mode, estimated by assuming that the distribution of the maximum diameters of the measured particles follows a log-normal distribution, is taken as the particle diameter.

In the above composition formula, O is an oxygen atom, and Aa, Ab, B, and X represent any element or group. Aa, Ab, and B are different types of cations, while O and X are different types of anions. Aa is an alkali metal cation. The pyrochlore-type oxide contains multiple cations in its composition, including an alkali metal cation Aa and multiple cations Ab and B that are different from the alkali metal cation Aa. In other words, the pyrochlore-type oxide contains multiple cations in its composition, including the alkali metal cation Aa.

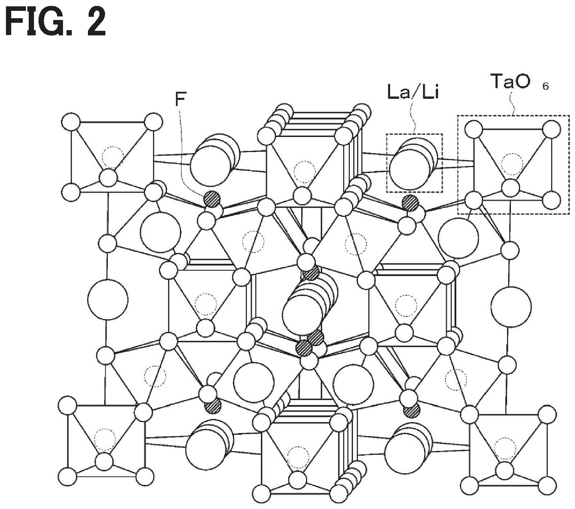

As shown in FIG. 2, the solid electrolyte 15 with a pyrochlore structure has a crystal structure in which a three-dimensional network of octahedra composed of BO₆ is formed. BO₆ consists of a cation B at the center with O positioned at the vertices, and it shares vertices with adjacent BO₆. In the three-dimensional network consisting of BO₆, a hexagonal tunnel structure is formed where cation A and anion X are positioned.

In the above composition formula, 0.6<α<2.0, 0<β≤1, and 0<γ≤1. When α changes, the composition ratio of Aa and Ab changes, and when β changes, the composition ratio of O and X changes.

The cation Aa is an alkali metal cation. As the alkali metal represented by Aa, any one of Li, Na, K, Rb, or Cs can be used. As the cation Aa, Mg or H other than alkali metals may also be used. In other words, the cation Aa includes at least one selected from Li, Na, K, Rb, Cs, Mg, and H. In this embodiment, Li is used as Aa. The composition ratio (2-α) of Aa is in the range of 0<(2-α)<1.4.

The cation Ab includes at least a lanthanoid. As the lanthanoid represented by Ab, at least one of La, Ce, Nd, or Sm can be used. In the present embodiment, La is used as Ab. The composition ratio (1+α)/3 of Ab is in the range of 0.53<(1+α)/3<1.

The basic structure of the cation Ab consists of a lanthanoid. However, a portion of the lanthanoid constituting Ab may be substituted with an alkaline earth metal (such as Ca, Mg, or Sr). In the solid electrolyte 15 of the present embodiment, it is considered that since the lanthanoid is contained in the pyrochlore structure in which 0.6<α<2.0 and 0<β≤1 in the above composition formula, defects are generated in the crystal structure and the ionic conductivity is improved. In the present embodiment, La is used as Ab.

In the solid electrolyte 15 of the present embodiment, a cation A in a composition formula "A₂B₂O₇" of a general pyrochlore structure is a composite cation including lithium and the lanthanoid. This is considered to contribute to the improvement of the ionic conductivity of the solid electrolyte 15.

The cation B is a metal cation different from Aa and Ab, selected from transition metals or metals from groups 13 to 15. B forms an octahedron surrounded by six O atoms within the crystal. As the transition metal represented by B, a group 4 or group 5 transition metal can be used, and more specifically, at least one of Nb, Ta, Ti, Zr, Hf, or V can be used. As the group 13 element represented by B, Al, Ga, or In can be used. As the group 14 element, Ge or Sn can be used. As the group 15 element, Sb or Bi can be used. In the present embodiment, Ta is used as B.

The anion X is an anion that can substitute for the O atoms constituting the pyrochlore structure. X has different electronegativity and polarizability compared to the O atom. As the anion represented by X, at least one of O, F, Cl, Br, I, S, OH, and P can be used. The composition ratio γ of X falls in the range of 0<γ≤1, and at least a portion of the O atoms constituting the pyrochlore structure is substituted with X. In the present embodiment, F is used as X.

The solid electrolyte 15 of the present embodiment has a defect structure in which lattice defects are included in the crystal by replacing a part of the O atoms constituting the pyrochlore structure with anions having electronegativity and polarizability different from those of the O atoms. It is considered that the solid electrolyte 15 of the present embodiment has improved ionic conductivity due to the presence of the defect structure in the pyrochlore structure.

In the solid electrolyte 15 of the present embodiment, the defect structure is a state in which Aa and Ab are partially deficient. The composition formula for the general pyrochlore structure is "A₂B₂O₇", and the compositional ratio of the cation A is 2. In contrast, in the solid electrolyte 15 of the present embodiment, composition ratios of Aa and Ab are "2-α" and"(1+α)/3", respectively, and 0.6<α<2.0, so that the total composition ratio of Aa and Ab is less than 2. That is, in the crystal structure of the solid electrolyte 15 of the present embodiment, at least one of Aa and Ab is partially deficient. A composition ratio corresponding to the deficient part of Aa and Ab is (2α-1)/3.

In addition to the deviation of the composition ratio, the defect structure can also be formed by making a sum of valences of the cations including Aa, Ab and B and the anions including O and X negative in the above composition formula.

Furthermore, the solid electrolyte 15 of the present embodiment is a composite anionic compound in which multiple anions, such as O and X, are included in the pyrochlore structure. Because the anion represented by X is present in the BO₆ coordinated octahedral structure, the alkali metal of Aa can be positioned at the center of the space between the BO₆ coordinated octahedra without being attracted to the BO₆ coordinated octahedra. Therefore, it is considered that the solid electrolyte 15 of the present embodiment has high ionic conductivity when used in an electric field such as a battery.

Additionally, since α, β, and γ in the above compositional formula affect lattice defects and ionic conductivity, it is preferable to set α, β, and γ within an appropriate range. When the values of α, β, and γ are large, the defect concentration in the crystal lattice increases. However, if these values exceed a certain amount, the concentration of the alkali metal represented by Aa decreases, leading to a reduction in ionic conductivity. Thus, it is preferable to control α within the range of 0.6<α< 2.0, β within the range of 0<β≤1, and γ within the range of 0<γ≤1.

In the present embodiment, a pyrochlore-type oxide represented by "Li_{1.25}La_{0.58}Ta₂O₆F" is used as the solid electrolyte 15. In other words, Li is used as the cation Aa, La is used as the cation Ab, Ta or Nb is used as the cation B, and F is used as the anion X, with α=0.75, β=1, and γ=1. Hereinafter, "Li_{1.25}La_{0.58}Ta₂O₆F" is also referred to as "LLTOF."

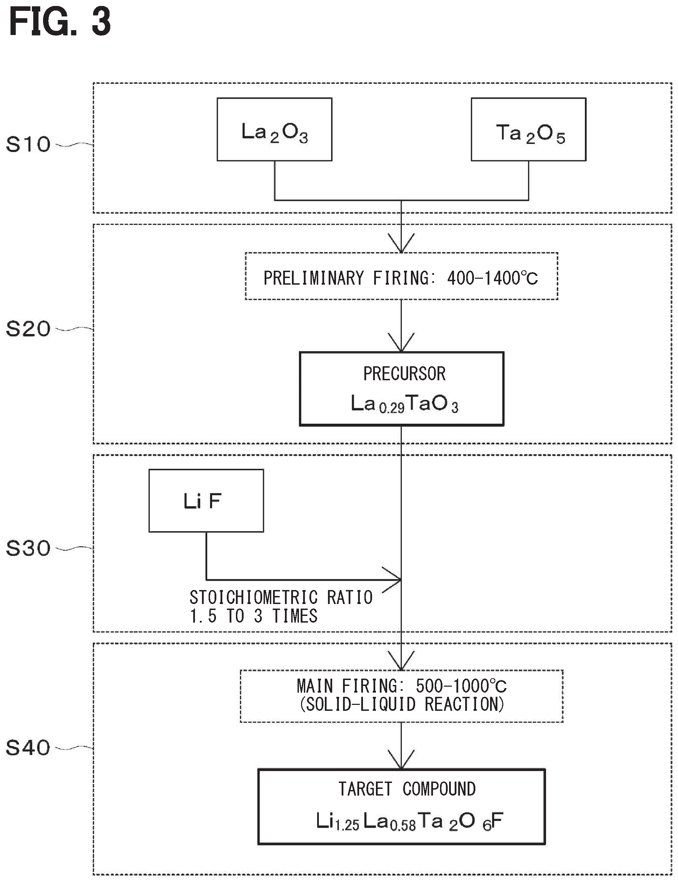

Next, a method for manufacturing the solid electrolyte 15 of the present embodiment will be described with reference to FIG. 3. In the method for manufacturing the solid electrolyte 15, a first mixing process S10, a first firing process S20, a second mixing process S30, and a second firing process S40 are sequentially performed. The second mixing process S30 and the second firing process S40 correspond to a mixing process and a firing process, respectively.

### (First Mixing Process)

In the first mixing process S10, a plurality of raw materials each containing one of the cations included in a target compound LLTOF are mixed to obtain a mixture. The plurality of raw materials mixed in the first mixing process S10 include a lanthanum source and a tantalum source. The lanthanum source is a raw material for the cation Ab, and the tantalum source is a raw material for the cation B. As the lanthanum source and the tantalum source, oxides, carbonates, fluorides, acetates, chlorides, hydroxides, and the like can be used. In the present embodiment, La₂O₃ is used as the lanthanum source and Ta₂O₅ is used as the tantalum source. In the first mixing process, particles of La₂O₃ and Ta₂O₅ are mixed at a predetermined ratio.

### (First Firing Process)

Next, the first firing process S20 is performed in which the mixture of La₂O₃ and Ta₂O₅ is fired. The first firing process S20 can be regarded as a preliminary firing process. In the first firing process S20, the mixture is heated in an atmospheric or inert atmosphere to fire the precursor La_{0.29}TaO₃.

The heating time in the first firing process S20 is preferably 1 to 20 hours, and more preferably 5 to 10 hours. The heating temperature in the first firing process S20 is preferably within a range of 400°C to 1400°C, and more preferably within a range of 500°C to 800°C.

In the first firing process S20, a solid-phase reaction occurs in which La₂O₃ and Ta₂O₅ react while remaining in the solid state. By the first firing process S20, La_{0.29}TaO₃ is produced as a precursor of the target compound. In the first firing process, in addition to the precursor La_{0.29}TaO₃, the raw materials La₂O₃ and Ta₂O₅ may remain unreacted.

The precursor La_{0.29}TaO₃ is a perovskite-type oxide. The precursor La_{0.29}TaO₃ is a composite oxide containing multiple cations, and includes at least cations other than alkali metal cations. The precursor of the present embodiment does not contain an alkali metal cation (Li in the present embodiment) corresponding to the cation Aa, and contains La as the cation Ab and Ta as the cation B. In other words, the precursor La_{0.29}TaO₃ is a composite oxide that contains, in its composition, at least multiple cations Ab and B other than the alkali metal cation Aa.

The precursor essentially does not contain an alkali metal cation, but may contain a trace amount of the alkali metal cation. When the precursor contains the alkali metal cation, a composition ratio of the alkali metal cation in the precursor is less than a composition ratio of the alkali metal cation in LiF.

### (Second Mixing Process)

Next, a lithium source and a fluorine source are prepared as raw materials for the target compound LLTOF, and these are mixed with the precursor La_{0.29}TaO₃ to obtain a mixture in the second mixing process S30. The lithium source serves as the raw material for the cation Aa, and the fluorine source serves as the raw material for the anion X. As the lithium source, oxides, carbonates, fluorides, acetates, chlorides, hydroxides, and the like can be used. In the present embodiment, LiF is used as both the lithium source and the fluorine source. LiF is an alkali metal compound containing an alkali metal cation.

In the second mixing process, LiF is mixed with the precursor La_{0.29}TaO₃ at a predetermined ratio to obtain a mixture. The mixture contains an amount of LiF exceeding the stoichiometric ratio (molar ratio) with respect to the target compound LLTOF. In other words, the mixture contains an excess amount of LiF relative to the target compound. Therefore, in the second firing process performed after the second mixing process, LiF melts and liquefies, and a solid-liquid reaction occurs in which the liquid-phase LiF reacts with the solid-phase La_{0.29}TaO₃. The stoichiometric ratio refers to the ratio of the number of moles of LiF, which is the reactant, to the number of moles of LLTOF, which is the target compound.

It is preferable that the amount of LiF be within a range of 1.5 to 3 times the stoichiometric ratio (molar ratio) relative to the target compound. If the amount of LiF is too low, the decrease in LiF due to the progress of the reaction during the second firing process may result in insufficient liquid-phase LiF, potentially making it impossible to maintain the solid-liquid reaction. Therefore, it is preferable that the amount of LiF be greater than or equal to 1.5 times the stoichiometric ratio. If the amount of LiF is too high, a large amount of LiF will remain unreacted during the formation of the target compound, resulting in an increased amount of impurities. Furthermore, if the amount of LiF is excessively high, the composition of the resulting product is likely to deviate from that of the target compound LLTOF. Therefore, it is preferable that the amount of LiF be less than or equal to 3 times the stoichiometric ratio. In the present embodiment, the amount of LiF is set to be twice the stoichiometric ratio relative to the target compound.

### (Second Firing Process)

Next, the second firing process S40 is performed, in which the mixture of precursor La_{0.29}TaO₃ and the lithium source LiF is fired. The second firing process S40 can be regarded as a main firing process. In the second firing process S40, the mixture of La_{0.29}TaO₃ and LiF is heated at a predetermined temperature under an atmospheric or inert atmosphere to fire the target compound LLTOF.

In the second firing process S40, LiF melts due to heating and becomes a liquid phase. That is, in the second firing process S40, the target compound LLTOF is produced by a solid-liquid reaction in which liquid-phase LiF reacts with solid-phase La_{0.29}TaO₃.

The mixture contains LiF in an amount excessive relative to the target compound. Therefore, even if the amount of LiF decreases as the reaction progresses, a sufficient amount of liquid-phase LiF can be ensured for the solid-liquid reaction.

The heating time in the second firing process S40 is preferably set to 1 to 20 hours, and more preferably to 1 to 10 hours. The heating temperature in the second firing process S40 is preferably in a range of 500°C to 1000°C, and more preferably in a range of 650°C to 850°C.

In the second firing process S40, firing at a high temperature increases the particle size of the product. Therefore, it is preferable to lower the heating temperature in order to reduce the particle size of the product. Furthermore, when firing at even higher temperatures, Li and F are likely to volatilize, which tends to cause a deviation in the composition of the resultant product from that of the target compound LLTOF. Therefore, it is preferable that the heating temperature in the second firing process S40 be 1000°C or lower, and more preferably 850°C or lower.

In addition, if the heating temperature in the second firing process S40 is too low, reactivity decreases and the reaction rate slows down, resulting in a longer time required for the formation of the pyrochlore-type oxide. Therefore, in order to suppress the decrease in reaction rate, it is preferable that the heating temperature in the second firing process S40 be 500°C or higher, and more preferably 650°C or higher.

In the second firing process S40, a eutectic reaction occurs between La_{0.29}TaO₃ and LiF. The precursor La_{0.29}TaO₃ of the present embodiment does not contain Li, which facilitates the occurrence of a eutectic reaction with LiF.

Due to the eutectic reaction, LiF melts at a temperature lower than its original melting point (848°C). Therefore, in the present embodiment, the heating temperature in the second firing process S40 is set to a temperature lower than the melting point of LiF (848°C). Specifically, the heating temperature in the second firing process S40 is set to 700°C.

In the second firing process S40, by firing La_{0.29}TaO₃ and LiF, the target compound LLTOF is produced. If impurities such as LiF remain in the product, the residual impurities can be separated by washing with water or a solvent. In the second firing process S40, a solid-liquid reaction between liquid-phase LiF and solid-phase La_{0.29}TaO₃ allows the reaction to proceed at a lower temperature than a solid-phase reaction. Therefore, the particle size of the pyrochlore-type oxide LLTOF can be reduced.

Through the above processes, it is possible to obtain crystals of a pyrochlore-type oxide represented by the composition formula "Li_{1.25}La_{0.58}Ta₂O₆F".

Furthermore, by adjusting the mixing ratios of La₂O₃ and Ta₂O₅, as well as the mixing ratio of LiF in the above manufacturing process, it is possible to obtain crystals with a pyrochlore structure represented by the composition formula "Li_{2-α}La_{(1+α)/3}Ta₂O_{7-β}F_{γ}". By changing the mixing ratios of La₂O₃, Ta₂O₅, and LiF, it is possible to adjust α, β, and γ in the composition formula. When firing is performed, a part of the materials is sublimated. Thus, the values of α, β, and γ can also be adjusted by changing the firing conditions, the atmosphere in the firing furnace, and the size of the firing furnace in the first and second firing processes.

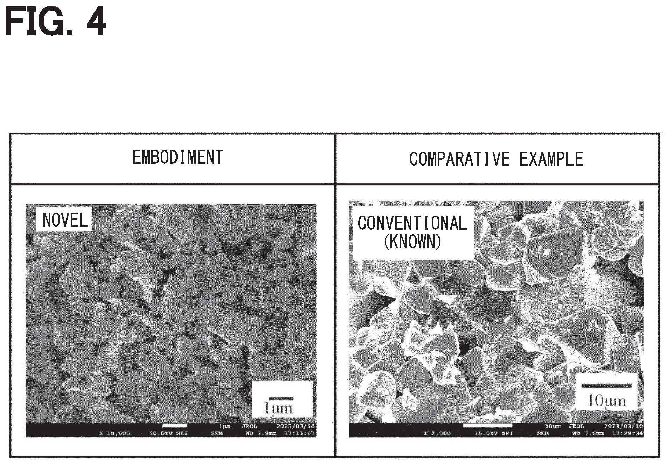

FIG. 4 shows SEM images of pyrochlore-type oxides according to the present embodiment and a comparative example. In the present embodiment, the pyrochlore-type oxide was produced by a solid-liquid reaction, whereas in the comparative example, the pyrochlore-type oxide was produced by a solid-phase reaction. The pyrochlore-type oxides of both the present embodiment and the comparative example are LLTOF. The scale of the SEM image in the present embodiment is 1 µm, while the scale of the SEM image in the comparative example is 10 µm.

In the comparative example, a mixture of La₂O₃, Li₂CO₃, and Ta₂O₅ was fired to obtain the precursor Li_{0.5}La_{0.5}Ta₂O₆, which was then mixed with LiF and LaF₃ and fired at 1200°C to produce LLTOF by solid-phase reaction. LiF and LaF₃ were used in stoichiometric amounts relative to the target compound LLTOF.

As shown in FIG. 4, the particle size of the pyrochlore-type oxide in the comparative example greatly exceeded 10 µm, whereas in the present embodiment, a pyrochlore-type oxide with particle size of several micrometers or less was obtained. Thus, in the present embodiment, the particles of the pyrochlore-type oxide can be made finer. By using the pyrochlore-type oxide of the present embodiment as the solid electrolyte 15 of the secondary battery 10, the solid electrolyte 15 can be made thinner, and the resistance of the secondary battery 10 can be reduced.

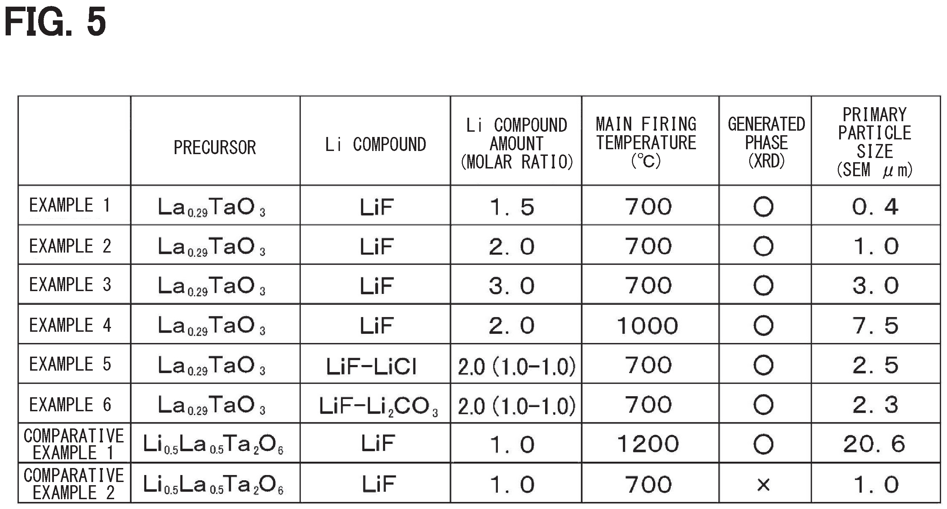

Here, particle sizes of pyrochlore-type oxides according to the present embodiment will be explained using Examples and Comparative Examples shown in FIG. 5. In Examples 1 to 6, a mixture of a precursor that does not contain Li and a Li compound in an amount exceeding the stoichiometric ratio to the target compound was fired by a solid-liquid reaction. In Comparative Examples 1 and 2, a mixture of a precursor containing Li and a Li compound in an amount equivalent to the stoichiometric ratio to the target compound was fired by a solid-phase reaction.

The precursors used in Examples 1 to 6 and Comparative Examples 1 and 2 were composite oxides containing multiple cations and were perovskite-type oxides. The precursors in Examples 1 to 6 were La_{0.29}TaO₃, while the precursors in Comparative Examples 1 and 2 were Li_{0.5}La_{0.5}Ta₂O₆. The Li compound used in Examples 1 to 4 and Comparative Examples 1 and 2 was LiF, the Li compounds used in Example 5 were LiF and LiCl, and the Li compounds used in Example 6 were LiF and Li₂CO₃.

The stoichiometric ratio (molar ratio) of the Li compound relative to the target compound was 1.5 in Example 1, 2.0 in Examples 2 and 4 to 6, 3.0 in Example 3, and 1.0 in Comparative Examples 1 and 2. In Example 5, the stoichiometric ratio of each of LiF and LiCl was 1.0, with their combined stoichiometric ratio totaling 2.0. Similarly, in Example 6, the stoichiometric ratio of each of LiF and Li₂CO₃ was 1.0, with their combined stoichiometric ratio totaling 2.0. The firing temperature in Examples 1 to 3, 5, 6, and Comparative Example 2 was 700°C, the firing temperature in Example 5 was 1000°C, and the firing temperature in Comparative Example 1 was 1200°C.

As a result of evaluating the generated phases of the compounds obtained in Examples 1 to 6 and Comparative Examples 1 and 2 by X-ray diffraction (XRD), the pyrochlore phase was confirmed in Examples 1 to 6 and Comparative Example 1, but was not confirmed in Comparative Example 2. In other words, in Examples 1 to 6 using the liquid-phase reaction, a pyrochlore-type oxide was obtained at a low temperature of 1000°C or lower. In contrast, in Comparative Examples 1 and 2 using the solid-phase reaction, a pyrochlore-type oxide was obtained only at a high temperature of 1200°C, but could not be obtained at a low temperature of 700°C.

The primary particle sizes of the obtained compounds were 0.4 µm in Example 1, 1.0 µm in Example 2, 3.0 µm in Example 3, 7.5 µm in Example 4, 2.5 µm in Example 5, 2.3 µm in Example 6, 20.6 µm in Comparative Example 1, and 1.0 µm in Comparative Example 2.

While the particle size in Comparative Example 1, which was fired at 1200°C, was 20.6 µm, the particle sizes in Examples 1 to 6, which were fired at 1000°C or below, were 7.5 µm or less, indicating a significant reduction in particle size. Furthermore, Examples 1 to 3, 5, and 6, which were fired at 700°C, yielded smaller particle sizes than Example 4, which was fired at 1000°C. It should be noted that in Comparative Example 2, which was fired at 700°C, a particle size of 1.0 µm was obtained. However, as described above, the target compound could not be produced because the solid-phase reaction was performed at a low temperature.

In the present embodiment described above, a mixture of a precursor of a pyrochlore-type oxide, specifically, a composite oxide that does not contain an alkali metal compound, and an alkali metal compound in an amount exceeding a stoichiometric ratio for the pyrochlore-type oxide is heated and fired to produce the pyrochlore-type oxide. As a result, the alkali metal compound can be liquefied, and the pyrochlore-type oxide can be produced through a solid-liquid reaction in which the alkali metal compound in the liquid phase reacts with the composite oxide in the solid phase. In the solid-liquid reaction, the pyrochlore-type oxide can be produced at a lower temperature than in a solid-phase reaction, and by lowering the firing temperature, particles of the pyrochlore-type oxide can be made finer. By using a finely particulate pyrochlore-type oxide as the solid electrolyte 15 of the secondary battery 10, the solid electrolyte 15 can be made thinner, thereby reducing the resistance of the secondary battery 10.

Furthermore, through the eutectic reaction between the composite oxide in the solid phase and the alkali metal compound in the liquid phase, the alkali metal compound melts at a temperature lower than its original melting point. Therefore, in the present embodiment, the firing temperature of the mixture of the composite oxide and the alkali metal compound is set to be lower than the melting point of the alkali metal compound. Since the alkali metal compound contained in the mixture melts at a temperature lower than its melting point due to the eutectic reaction, the alkali metal compound can be melted and a solid-liquid reaction can be performed even when the firing temperature is set to be lower than the melting point of the alkali metal compound. As a result, a pyrochlore-type oxide can be produced at a lower firing temperature, and the particles of the pyrochlore-type oxide can be made even finer.

The present disclosure is not limited to the embodiments described above, and can be variously modified as follows without departing from the gist of the present disclosure. The means disclosed in the individual embodiments may be appropriately combined as long as the combination is feasible.

For example, in the above-described embodiments, the pyrochlore-type oxides of the present disclosure are applied to the solid electrolyte of the lithium-ion battery, but the pyrochlore-type oxides of the present disclosure may also be applied to other secondary batteries. Specifically, when K is used as the alkali metal represented by Aa in the composition formula of the pyrochlore-type oxide, it can be used as a solid electrolyte for potassium-ion batteries. When Na is used as the alkali metal represented by Aa in the composition formula, it can be used as a solid electrolyte for sodium-ion batteries.

The features of the method for producing the pyrochlore-type oxide disclosed in the present specification are as follows.

### (First Feature)

A method for producing a pyrochlore-type oxide that contains a plurality of cations including an alkali metal cation, in its composition, includes a mixing process (S30) of mixing a composite oxide that contains at least cations other than the alkali metal cation with an alkali metal compound that contains the alkali metal cation, and a firing process (S40) of heating a mixture containing the composite oxide and the alkali metal compound at a predetermined temperature to produce the pyrochlore-type oxide. In a case where the composite oxide contains the alkali metal cation, a composition ratio of the alkali metal cation in the composite oxide is less than a composition ratio of the alkali metal cation in the alkali metal compound, and the mixture contains the alkali metal compound in an amount exceeding a stoichiometric ratio relative to the pyrochlore-type oxide. In the firing process, the alkali metal compound is liquefied by heating at the predetermined temperature.

### (Second Feature)

In the method for producing the pyrochlore-type oxide according to the first feature, the predetermined temperature is in a range of 500°C to 1000°C.

### (Third Feature)

In the method for producing the pyrochlore-type oxide according to the first or second feature, the predetermined temperature is lower than a melting point of the alkali metal compound.

### (Fourth Feature)

In the method for producing the pyrochlore-type oxide according to any one of the first to third features, a primary particle size of the pyrochlore-type oxide is in a range of 0.01 µm to 10 µm.

### (Fifth Feature)

In the method for producing the pyrochlore-type oxide according to any one of the first to fourth features, the composite oxide does not contain the alkali metal cation in its composition.

### (Sixth Feature)

In the method for producing the pyrochlore-type oxide according to any one of the first to fifth features, the composite oxide is a perovskite-type oxide.

### (Seventh Feature)

In the method for producing the pyrochlore-type oxide according to any one of the first to sixth features, the pyrochlore-type oxide is produced using a plurality of raw materials each containing one of the plurality of cations, and each of the plurality of raw materials includes at least one selected from a group consisting of fluorides, acetates, chlorides, hydroxides, carbonates, and oxides.

### (Eighth Feature)

In the method for producing the pyrochlore-type oxide according to any one of the first to seventh features, the pyrochlore-type oxide is a solid electrolyte (15) for a secondary battery.

Although the present disclosure has been described according to the embodiments, it is understood that the present disclosure is not limited to the above-described embodiments or structures. To the contrary, the present disclosure is intended to cover various modifications and equivalent arrangements. In addition, while the various elements are shown in various combinations and configurations, which are exemplary, other combinations and configurations, including more, less or only a single element, are also within the spirit and scope of the present disclosure.

## Claims

1. A method for producing a pyrochlore-type oxide that contains a plurality of cations including an alkali metal cation, in its composition, the method comprising:
a mixing process (S30) of mixing a composite oxide that contains at least cations other than the alkali metal cation with an alkali metal compound that contains the alkali metal cation; and
a firing process (S40) of heating a mixture containing the composite oxide and the alkali metal compound at a predetermined temperature to produce the pyrochlore-type oxide, wherein
in a case where the composite oxide contains the alkali metal cation, a composition ratio of the alkali metal cation in the composite oxide is less than a composition ratio of the alkali metal cation in the alkali metal compound,
the mixture contains the alkali metal compound in an amount exceeding a stoichiometric ratio relative to the pyrochlore-type oxide, and
in the firing process, the alkali metal compound is liquefied by heating at the predetermined temperature.

2. The method for producing the pyrochlore-type oxide according to claim 1, wherein the predetermined temperature is in a range of 500°C to 1000°C.

3. The method for producing the pyrochlore-type oxide according to claim 1, wherein the predetermined temperature is lower than a melting point of the alkali metal compound.

4. The method for producing the pyrochlore-type oxide according to claim 1, wherein a primary particle size of the pyrochlore-type oxide is in a range of 0.01 µm to 10 µm.

5. The method for producing the pyrochlore-type oxide according to claim 1, wherein the composite oxide does not contain the alkali metal cation in its composition.

6. The method for producing the pyrochlore-type oxide according to claim 1, wherein the composite oxide is a perovskite-type oxide.

7. The method for producing the pyrochlore-type oxide according to claim 1, wherein
the pyrochlore-type oxide is produced using a plurality of raw materials each containing one of the plurality of cations, and
each of the plurality of raw materials includes at least one selected from a group consisting of fluorides, acetates, chlorides, hydroxides, carbonates, and oxides.

8. The method for producing the pyrochlore-type oxide according to any one of claims 1 to 7, wherein
the pyrochlore-type oxide is a solid electrolyte (15) for a secondary battery.
